# EUROPEAN PATENT SPECIFICATION

(11) **EP 4 273 558 B1**
(45) Date of publication and mention of the grant of the patent: **24.07.2024**
(21) Application number: 22171564.2
(22) Date of filing: 04.05.2022
(51) Int. Cl.: G01P 15/08, G01P 15/12, G01P 21/00, G01L 5/00, G01B 7/16, A47B 9/04

(54) **COLLISION DETECTION DEVICE FOR ADJUSTABLE FURNITURE**
KOLLISIONSERKENNUNGSVORRICHTUNG FÜR VERSTELLBARE MÖBEL
DISPOSITIF DE DÉTECTION DE COLLISION POUR MEUBLES RÉGLABLES

(43) Date of publication of application: 08.11.2023
(73) Proprietor: Rol Ergo AB, 555 93 Jönköping (SE)
(72) Inventor: Clausén, Björn, Laholm (SE)
(74) Representative: AWA Sweden AB

(56) References cited:
- EP-B1- 1 704 797
- CN-A- 112 366 888
- US-A1- 2011 061 570
- US-A1- 2021 239 459
- US-B2- 7 661 292

## Description

### Technical field of invention

This invention relates to a device for detecting a collision in an adjustable piece of furniture.

### Background

Tables and other pieces of furniture having parts which are movable relative each other such as by means of e.g. one or several telescopic columns are known from the prior art. Adjustable tabletops enable alternation between sitting and standing by a table and adjustments based on the preference of the user e.g. due to the height of the user or a chair. Telescopic columns may comprise several telescopic tubes with different cross sections wherein tubes with smaller cross sections extend within tubes with larger cross sections in a contracted state of the telescopic column. Telescopic columns may be driven by a driving arrangement comprising an outside threaded spindle which is driven to move radially within and along an inside threaded hollow spindle of the driving arrangement, by means of an electric motor.

There may however be a risk equipped with the adjustment of the height of the surface by extending and contracting the telescopic columns. A collision between a surface with an obstacle may cause property damages and/or human injuries if the motion of the surface continues after the collision.

There are collision prevention devices in the prior art such as mini safety edges which may be applied to pre-defined regions of the movable surface and which transmit a signal when a pressure are applied to them, causing the motion of the driving arrangement to stop through a signal that is sent to a controller unit of the driving arrangement. An important drawback of these is that the motion is stopped only if the obstacle comes into contact with a mini safety edge.

To solve this problem there is prior art comprising a piezoelectric diaphragm, which detects a change in the flexure of a tube of a telescopic column, since a collision between the movable surface and an obstacle may imply a flexure of such a tube, or the acceleration of a movable part of the telescopic column, since a collision may imply an acceleration of such a part.

A drawback with such solutions is however that the piezoelectric diaphragm may falsely signal for a collision due to e.g. friction between movable parts of the telescopic column implying undesired acceleration or flexion of tubes of the telescopic column. Moreover, friction between movable parts may change over the lifetime of a telescopic column due to abrasion, entailing unreliable detection. Further, present solutions are unable to detect collisions where the collision force is low, implying cases where collision detection devices fail to detect critical collisions.

There is therefore a need for a solution which detect collisions with higher reliability and speed, and decreases the probability of false collision.

The following documents are examples of known height adjustable desks comprising different collision sensors.

US2011/061570 A1 discloses a piezo element which is subjected to a compression in case of a collision. CN112366888 A discloses strain gauges located on a positioning plate of the desk's telescopic sleeve. EP1704797 B1 discloses similarly strain gauges or piezo elements which are located on a structural element of the telescopic arrangement. US2021/239459 A1 discloses an optical sensor (light barrier with a movable shutter) detecting the flexure of the desk top in case of collision. US7,661 ,292 B2 discloses a piezoelectric ceramic plate located on a structural biased plate, whereby a deformation in the structural biased plate imposes a deformation of the piezoelectric sensor.

### Summary

It is an object of the present inventive concept to provide an improved solution which alleviates the mentioned drawbacks with present solutions. Furthermore it is an object to detect a collision during motion of an adjustable piece of furniture, and in particular a collision between a movable surface of the piece of furniture, such as a tabletop, with an obstacle.

According to a first aspect of the present invention, the present invention provides a collision detection device, configured to be arranged in an adjustable piece of furniture, said detection device being configured to detect a collision and/or load on the piece of furniture during motion of said adjustable piece of furniture. The adjustable piece of furniture comprises a driving arrangement and a first part and a second part which are movable relative each other. The collision detection device is configured to detect a collision during motion of said adjustable piece of furniture. The collision device may detect a collision, with higher reliability than devices in the prior art. This is important from a safety perspective and to avoid property damage. The collision detection device may detect a collision with any type of obstacle which resists a motion of said piece of furniture. The present invention may be able to cope with legislation which prior art inventions may fail to do. The obstacle may be a part of furniture, a body part or any other object. A collision between the movable surface, during motion, and an obstacle may imply a resistance force counteracting the driving force of the driving arrangement. Such force may cause a load on the collision detection device, which the collision detection device may detect. The collision detection device comprises a holder configured to, when in use, be arranged to one of the first and second parts of the adjustable piece of furniture to be at least indirectly in contact with a part of the driving arrangement. The collision detection device also comprises a circuit board arranged on the holder, said circuit board comprising a wiring circuit on at least one of its sides.

Furthermore, an electrical characteristic of the wiring circuit is configured to depend on the flexure of the circuit board.

The holder may be in such contact with the driving arrangement and the circuit board so that force from the driving arrangement may be transmitted to the circuit board. Contact force between the holder and the resistance force from the driving arrangement may imply a bending moment onto a part of the piece of furniture or the driving arrangement which acts on the circuit board via the holder, implying a flexure of said circuit board.

The holder may be a solid unit made of e.g. plastic or metal. The holder may be formed and shaped to hold the circuit board fixedly. The circuit board may be arranged on the holder in a fixedly manner such that any motion of the holder is transferred to the circuit board.

The circuit board may comprise a substrate on which the at least one wiring circuit may be arranged. The circuit board may further comprise at least two connection terminals for connecting the ends of the at least one wiring circuit to another entity, such as a processing unit. The circuit board may be configured for receiving an electrical current through the wiring circuit when in use. The electrical current and/or electrical voltage through the wiring circuit may be affected by electrical characteristics of the wiring circuit. Such electrical characteristics may change depending on forces acting on the circuit board.

The circuit board, comprising at least one wiring circuit, may be designed such that an electrical characteristic depends on the flexure of the circuit board. The length of the wiring circuit may be selected to be appropriately long for such effects to be sufficiently large to be measurable with appropriate accuracy. In one embodiment, the wiring circuit may be made as long as practically possible on the circuit board.

Furthermore, the use of a wiring circuit may have advantages compared to the use of piezoelectric materials. Piezoelectric membranes have high-temperature sensitivity, possibly giving rise to varying detection sensitivity dependent on the temperature condition where the collision detection device is placed.

Moreover, piezoelectric diaphragms are not suitable for static conditions and do only measure fluctuations in conditions. For a fluctuation in bending moment, a voltage is generated which gives rise to an electrical current but no electrical current flows from the piezoelectric diaphragms during a steady motion of the telescopic column. With the present solution there may however be a voltage over the wiring circuit entailing a measurable electrical current also during steady motion and halt of the adjustable piece of furniture.

A collision for which the collision detection device is configured to detect may be defined as an increase of load on the adjustable piece of furniture and/or the collision detection device. The collision detection device may thereby be configured to detect such load and/or load change. The collision detection device may in some embodiments be defined as a load detection device for the adjustable piece of furniture. The terms collision detection device and load detection device may thereby be used interchangeably.

In one embodiment the electrical characteristic depends on a resistance force mechanically resisting the motion of the adjustable piece of furniture.

In one embodiment the collision detection device may comprise a processing unit or another unit, such as a power supply, which may be configured to supply a current through and apply a voltage over the at least one wiring circuit of the circuit board, and measuring an electrical quantity which may be dependent on the electrical characteristic. To measure said electrical quantity may entail appropriate information to be provided to the processing unit, by which a detection may be based. The processing unit may further be provided with information relating to a pre-measured correlation between said electrical quantity and said resistance force. By for example, applying a known resistance force during motion of the adjustable piece of furniture and measuring the impact on the electrical quantity, a correspondence may be estimated entailing a possibility to control how large resistance force that shall be required for a detection. The sensitivity of the collision detection device may thereby be controlled and adjusted, for example due to regulations.

The processing unit may further register an electrical failure of the operation of the collision detection device, such as a short circuit or a broken circuit, which may be possible due to a voltage being applied not only during collision but also during steady motion and rest of the adjustable piece of furniture.

In one embodiment the processing unit may be configured to issue a collision event signal based on the measured electrical quantity of the at least one wiring circuit. The processing unit being configured to measure the electrical quantity may provide a detection of a change in the electrical characteristic due to a force acting on the collision detection device. The processing unit may be configured to issue a collision event signal based on the measured value of the electrical quantity being above or below a predetermined threshold.

In one embodiment, the processing unit may be configured to control the driving arrangement to halt and/or reverse the motion of the adjustable piece of furniture in case of a collision event. The collision event signal may be sent to the driving arrangement and may cause the motion of the driving arrangement to halt and/or be reversed, in order to release the obstacle, in case of the obstacle being clamped between the movable surface and some other object or surface. Information about during which conditions the collision event should be sent, may be provided to the processing device based on the assessment of an operator. It may be based on at least one of, the electrical characteristics of the wiring circuit, said electrical quantity, regulations, calibrations of the collision detection device, the weight of the tabletop and properties of the adjustable piece of furniture. A threshold of the electric quantity for which a collision event signal is issued may be varying dependent on if the adjustable piece of furniture is in a contracted, extended or any intermediate state.

In one embodiment the wiring circuit on the circuit board may be a first wiring circuit arranged on a first side of the circuit board, and the circuit board may further comprise a second wiring circuit on a second side of the circuit board, the electrical characteristics of both the first and second wiring circuits may depend on the flexure of the circuit board.

To have two wiring circuits entails the possibility to consider an electrical characteristic of both wiring circuits and to measure a difference in voltage between the wiring circuits. Further, two wiring circuits, both being affected by the same forces acting on the holder and the circuit board, may provide respective changes in the electrical characteristic, thereby causing double change that may be detected. The wiring circuits may be arranged and connected such that the voltage over one of the wiring circuits increases when the other decreases and vice versa. Therefore, the voltage difference may be larger than the voltage over one wiring circuit enhancing accuracy of related voltage measurements. Moreover, in case of an error of one of the wiring circuits such that the electrical characteristic of said wiring circuit does not answer appropriately to a collision, the other wiring circuit may still answer such that a collision may be successfully detected, implying improved safety of the collision detection device.

In one embodiment the processing unit is configured to measure an electrical quantity of both wiring circuits respectively.

In one embodiment the processing unit is configured to estimate a derivative of the electrical quantity of the at least one wiring circuit, based on repeated measurements or a continuous measurement of said electrical quantity of the at least one wiring circuit. By estimating a derivative, said derivative may be considered in determining whether a collision event signal should be issued. By considering both a derivative and an absolute value of an electrical quantity dependent on the electrical characteristic of the at least one wiring circuit, the reliability of the collision detection device to correctly issue a collision event signal may be improved. Both a significant absolute value of the electrical quantity, due to a significant flexure of the circuit board and a remarkable derivative, due to a rapid change in the flexure of the circuit board, may indicate an occurrence of a collision.

In one embodiment said electrical characteristic of the at least one wiring circuit may be electrical resistance. In one embodiment said electrical quantity of the at least one wiring circuit may be electrical voltage and/or current.

The flexure of the at least one wiring circuit may imply a change in electrical resistance of the at least one wiring circuit. Based on information of a quantity which is dependent on said electrical resistance, the collision detection device may issue a collision event signal. The measured voltage may be dependent on the electrical resistance of the at least one wiring circuit and said voltage may thereby indicate whether a collision has taken place.

In one embodiment said first and second part of the adjustable piece of furniture may be movable by means of at least one telescopic column. The at least one telescopic column may comprise at least two telescopic tubes and the driving arrangement. Said first part of the adjustable piece of furniture may be an inner tube of one of the at least one telescopic column and said second part of the adjustable piece of furniture may be a second tube of one of the at least one telescopic column. The at least one telescopic column may be configured to be arranged vertically. A surface, e.g. a tabletop may be height adjustable by means of the at least one telescopic column. With the present solution the detection may not be delayed by the time it takes for a tube to flex, which is the case for some prior art. A telescopic tube may be designed to have low flexibility, since large flexure of the tube may damage the operation of a telescopic tube and entail an undesirably slanting movable surface. A detection dependent on the flexure of a circuit board, which in the case of the present invention may be designed to have sufficient flexibility for a quick response to a collision to occur, may therefore be comparably advantageous.

In one embodiment the piece of furniture may be movable by means of a lever function. A first part of the driving arrangement may be at least indirectly in contact with the first part of the piece of furniture and a second part may be at least indirectly in contact with the second part of the driving arrangement. During motion of said piece of furniture, mechanical force may be transferred from first part of the driving arrangement to the second part of the driving arrangement resulting in motion of the first parts relative the second part of the piece of furniture. The first part of the driving arrangement may e.g. push or pull the second part of the driving arrangement. Alternatively mechanical force may be transferred directly from said first part of the driving arrangement to one of the parts of other furniture. The first part of the driving arrangement may e.g. push or pull the second part of the piece of furniture resulting in motion of the first part relative the second part of the piece of furniture

In one embodiment the adjustable piece of furniture is a bed or a chair and the first part of the adjustable piece of furniture is a backrest.

In one embodiment the holder is configured to be arranged in contact with a tube of said at least one tube of the telescopic column.

By contact between the holder and said inner surface there may be a contact force between the holder and said tube. This contact force together with resistance force from the driving arrangement may give rise to a bending moment by which the circuit board may be flexed. When arranged to the inner surface of the inner tube, the holder may be substantially fixed relative to said tube, at least at a portion of the holder, at the attachment point to the tube. Forces from e.g. the driving arrangement acting on another portion of the holder may thereby provide a torque between the points of contact between the driving arrangement and a tube, respectively. This torque thereby causes a flexure in the holder.

In one embodiment the holder is configured to be arranged on the adjustable piece of furniture through a snap-fit function or by screwing means.

In one embodiment the holder is configured to be arranged on one of the telescopic tubes through a snap-fit function or by screwing means.

Especially, the snap-fit function may provide an efficient mounting of the holder on the telescopic column and may facilitate removal of the holder for maintenance or replacement. The holder may be arranged through said snap-fit function or screwing means, by means of parts on the holder and corresponding parts on a longitudinal end of a tube of the telescopic column. In one embodiment the holder may be arranged at a longitudinal end of an inner telescopic tube. In one embodiment the holder may comprise a throughgoing hole configured to allow a part of the driving arrangement to extend through the holder.

The contact between said part of the driving arrangement and said hole may provide force from the driving arrangement to be transferred to the holder. The force from the driving arrangement may be from a motor and/or resistance from contact between the movable surface and an obstacle. The circuit board may be provided with a corresponding hole or opening such that the driving arrangement may extend therethrough. In an alternative embodiment, the holder and the circuit board may be provided with respective recesses or openings at a side portion of each entity, such that the driving arrangement may extend through or pass the collision detection device when arranged in the adjustable piece of furniture.

In one embodiment there is provided a roller bearing or a glide bearing between a part of the driving arrangement and the holder. The roller bearing or glide bearing may enable the driving arrangement to rotate relative to the collision detection device. The roller bearing may however allow at least longitudinally directed forces to be transferred from the driving arrangement to the holder.

In one embodiment the circuit board may extend outside of the holder on at least one of the sides of the holder. A larger circuit board may enable longer wiring circuits and thereby stronger correlation between said electric characteristics and the flexure of the circuit board contributing to higher accuracy of the collision detection device.

In one embodiment the processing unit may be configured to be calibrated for forces between the holder and the piece of furniture, by repeatedly or continuously measuring the electrical characteristic of the wiring circuit during an extension and/or contraction of the telescopic column.

Calibration of the processing unit may contribute to higher accuracy of the collision detection device. Varying roughness of surfaces of the piece of furniture, such surfaces of tubes of the telescopic columns may entail varying resistance to the motion of the telescopic column and thereby a varying bending moment applied to the circuit board. It may thereby be a risk of false detections. By calibrating the collision detection device during motion of the piece of furniture e.g. a contraction and/or extension of the telescopic column such variations may be accounted for. Moreover, roughness of surfaces of the piece of furniture may change due to abrasion. By calibration the effect of abrasion, which otherwise may imply an unreliability of the collision detection device with possibly false detections and/or failure in detecting a collision, may also be reduced and accounted for.

In one embodiment the circuit board may be pre-biased on the holder. In one embodiment the holder may be shaped to hold the circuit board in a bent configuration in a resting position. The circuit board being pre-biased may enhance the response of the flexure of the circuit board, to a varying force from the holder since the circuit board may be more flexible in a slightly flexed state. The detection of forces acting on the collision detection device may thereby be faster and more sensitive.

In one embodiment, the holder may comprise at least two edge clamps configured to clamp edges of the circuit board onto the holder, and the holder may comprise a protrusion, such that the circuit board is held in a bent configuration over said protrusion.

In one embodiment the collision detection device may be configured to be able to detect a force corresponding to a weight of 40 kg.

To be able to detect such a force is important for the safety of the user of the movable surface. This may also be in line with regulations. Some prior art solutions are unable to detect a collision with such small forces.

In one embodiment the piece of furniture may comprise several driving arrangements. For instance, the piece of furniture may comprise a plurality of telescopic columns and one or several of these may comprise driving arrangements.

In one embodiment, a plurality of detection devices may be used for one piece of furniture. For instance, detection devices may be arranged in one or several telescopic columns of the piece of furniture.

In one embodiment several detection devices may share one processing unit. One processing unit may apply a current through and apply a voltage over wiring circuits of several of the detection devices. Further, the processing unit may measure an electrical quantity of several detection devices. The processing unit may assess whether to issue a collision event signal based on the measured electrical quantity of wiring circuits of several detection devices. Such assessment may be made based on the measured electrical quantities from several detection devices individually, or in combination. Based on a detected collision, control signals may be sent to one or several driving arrangements in order to halt and/or reverse the motion of the piece of furniture.

According to a second aspect of the present invention there is provided a method to detect a collision of a piece of furniture, wherein the method comprises the steps of providing a collision detection device on said piece of furniture, according to any of the embodiments described above, measuring the electrical quantity of the wiring circuit during motion of the piece of furniture, and issuing, based on said measuring, a collision event signal.

The advantages described for the collision detection device may be applicable also for said method.

In one embodiment the method may comprise a step of halting and/or reversing the motion of the piece of furniture based on the measurement of the electrical quantity and/or the collision event signal.

In one embodiment the method may further comprise a step of comparing the measured electrical quantity with a predetermined threshold, wherein the predetermined threshold may vary along the telescopic column's stroke of length based on a calibration curve, the calibration curve providing load on the collision detection device in a state of the telescopic column without external load as a function of stroke position.

### Brief Description of the Drawings

The invention will in the following be described in more detail with reference to the enclosed drawings, wherein:
Fig. 1 illustrates a cross-sectional view of a telescopic column, which is movable by means of a driving arrangement, and on which a collision detection device is applicable, according to an embodiment of the invention.
Fig. 2 illustrates a perspective view of a sensor unit of a collision detection device, according to an embodiment of the invention.
Fig. 3 illustrates a transversal side view of a sensor unit of a collision detection device, according to an embodiment of the invention.
Fig. 4 illustrates a transversal side view of a sensor unit of a collision detection device, in relation to a driving part (spindle) of a driving arrangement of a telescopic column, according to an embodiment of the invention.
Fig. 5 illustrates a longitudinal side view of a sensor unit of a collision detection device, in relation to a driving part (spindle) of a driving arrangement of a telescopic column, according to an embodiment of the invention.
Fig. 6 illustrates an upper side view of a sensor unit of a collision detection device, in relation to a driving part (spindle) of a driving arrangement of a telescopic column, according to an embodiment of the invention.
Fig. 7 illustrates a perspective view of a collision detection device in relation to an inner tube of a telescopic column, according to an embodiment of the invention.
Fig. 8 illustrates a perspective view of a collision detection device in relation to an inner tube of a telescopic column, according to an embodiment of the invention.
Fig. 9 illustrates a top view of a first wiring circuit of a circuit board of a collision detection device, according to an embodiment of the invention.
Fig. 10 illustrates a detailed top view of a connection terminal of an upper side first wiring circuit on the upper side of a circuit board of a collision detection device, according to an embodiment of the invention.
Fig. 11 illustrates a top view of a second wiring circuit of a circuit board of a collision detection device, according to an embodiment of the invention.
Fig. 12 illustrates a detailed top view of a connection terminal of a second wiring circuit of a circuit board of a collision detection device, according to an embodiment of the invention.

### Detailed description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art, whereby the scope of the invention is defined by the appended claims. In the drawings, like numbers refer to like elements.

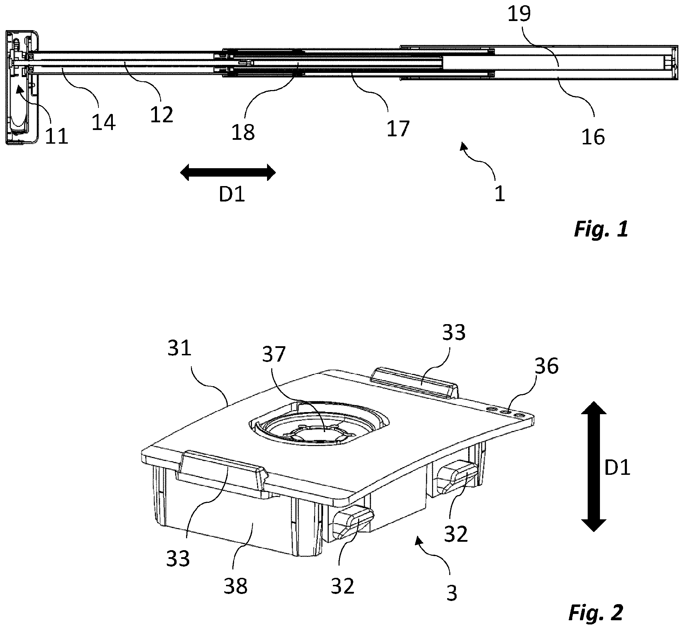

A piece of furniture may be movable by means of one or several telescopic columns 1, of which collision detection devices may be arranged on one or several telescopic columns, according to one embodiment of the present invention. In the illustrated embodiments the adjustable piece of furniture is exemplified as a telescopic column 1. The same inventive concept are equally applicable to other adjustable pieces of furniture. According to such an embodiment, Fig. 1 shows a telescopic column 1 which comprises an inner tube 14 and an outer tube 16. The telescopic column may also comprise intermediate tubes 17. In a common embodiment a horizontal surface, such as a table-top, is movable along the direction D1 by means of one or several telescopic columns 1, said telescopic columns 1 being arranged vertically. The telescopic tubes 14, 16, 17, wherein the inner tube 14 in the illustrated embodiment is the tube closest to the height adjustable surface, are movable by means of a driving arrangement 11. The driving arrangement 11 comprises an electrical motor 13, and driving parts 12, 18, 19 extending through the telescopic tubes 14, 16, 17 to cause contraction and extension of the telescopic column 1. The present invention may be equally applicable for telescopic columns which are constructed differently such as with an outer tube being closest to the height adjustable surface.

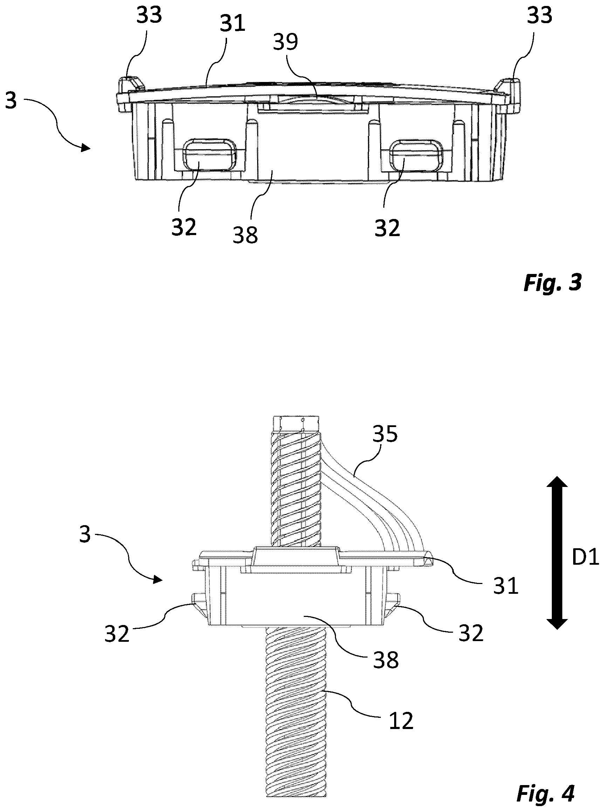

A collision detection device 2, comprising a sensor unit 3, is arranged in the telescopic column 1. Fig. 2 and Fig. 3 illustrate the sensor unit 3 of the collision detection device 2 from two different perspectives. The sensor unit 3 is configured to be arranged in an inner tube 14 of the telescopic column 1. The sensor unit 3 has a holder 38, which may be attached by a snap-fit function to the inner tube 14, by means of parts 32 arranged on the holder, and corresponding parts arranged on the inner tube 14.

On the holder 38, there is arranged a circuit board 31 by means of edge clamps 33 which clamps the circuit board 31 onto the holder 38. The edge clamps 33 may, by being arranged on the transversal sides of the circuit board 31, allow the circuit board 31 to be bent. The relation between the distance between the edge clamps and the length of the circuit board, and/or a protrusion 39 may imply that the circuit board 31 is pre-biased, entailing that the circuit board 31 is bent, to some extent, also when the telescopic column is at rest. The circuit board 31 is seen in having a flexure with a vertex above the protrusion 39, between the edge clamps 33 in Figure 3.

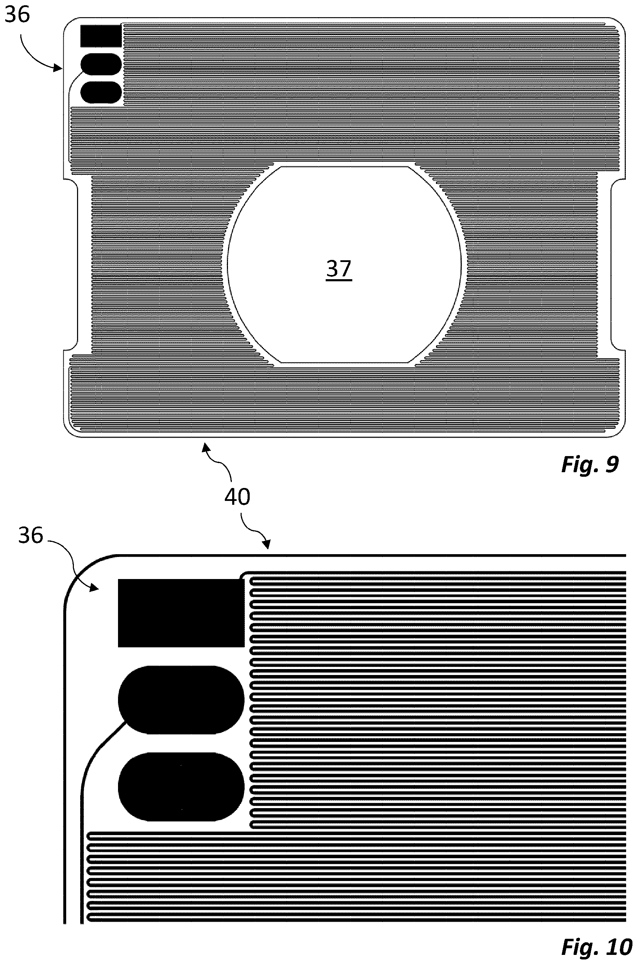

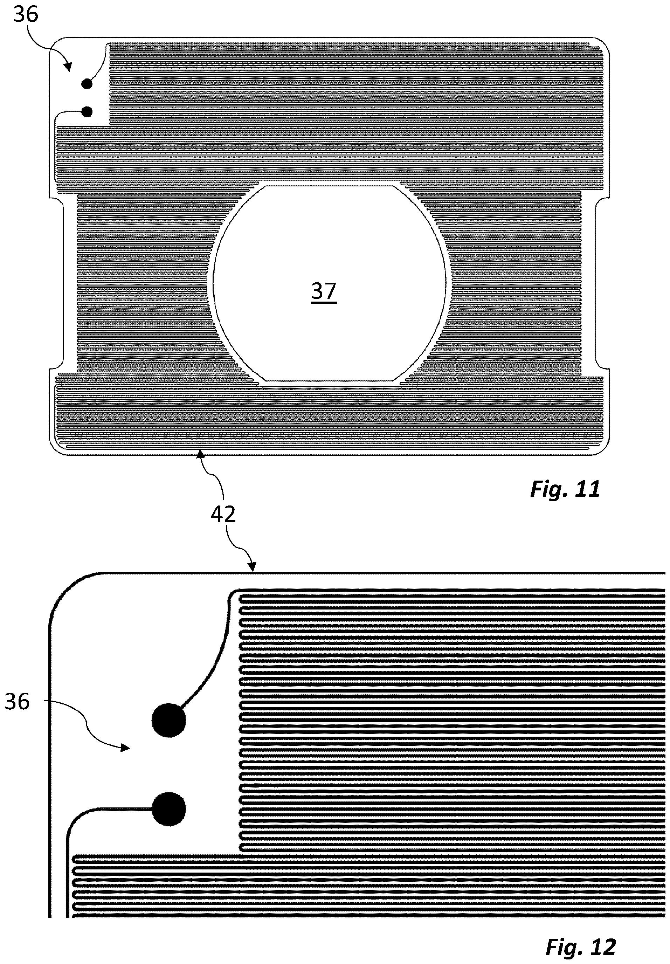

On both sides of the circuit board 31 there are arranged wiring circuits onto substrates. In Fig. 9 and Fig. 11 a first wiring circuit 40 on the upper side and a second wiring circuit 42 on lower side, respectively, of the circuit board 31, are illustrated. Connection terminals 36 are seen in more detail in Fig. 10 and Fig. 12, respectively. The wiring circuits 40 and 42 may comprise material with high conductivity. The wiring circuits 40 and 42 may be constructed with many turns and to be substantially as long as possible, given the area of the circuit board 31. When the circuit board 31 is flexed, the orientation of different portions of the wiring circuits 40 in relation to each other are changed. By supplying a current through the wiring circuits 40 and 42, which is described below, the voltage over the wiring circuits 40 and 42 varies with their resistance, and thereby the voltage may vary with the flexure of the circuit board 31. The ends of the wiring circuits may be connected by the connection terminals 36 of the circuit board 31 so as current is supplied through the wiring circuits 40 and so as the voltage of one of the wiring circuits increases when the voltage over the other of the wiring circuits decreases.

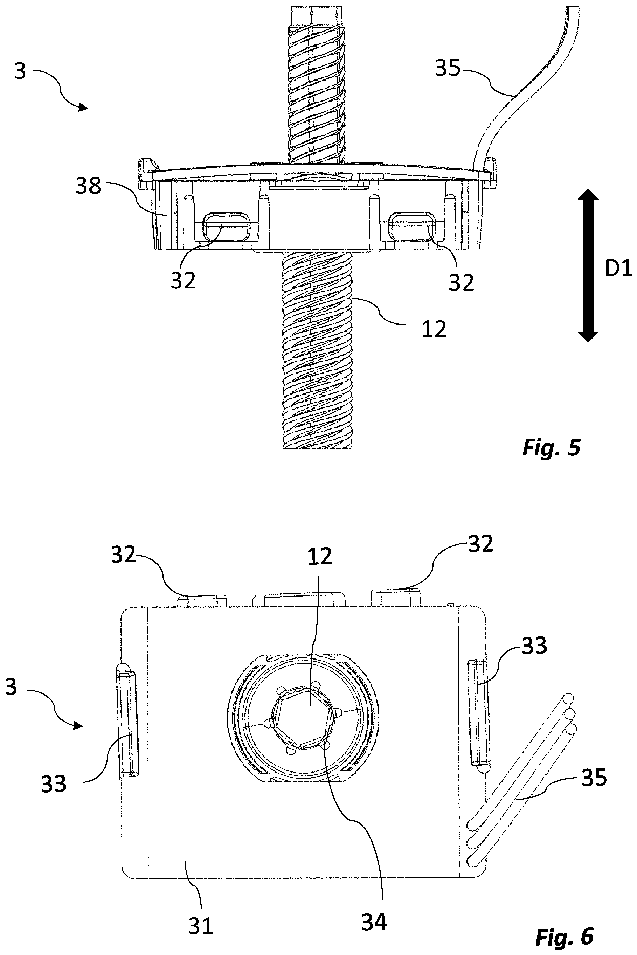

Figs. 4-6 illustrate the arrangement of the sensor unit 3 in relation to the driving part (spindle) 12 of the driving arrangement 11 from different perspectives. The sensor unit 3 has a hole 37 which extends through the holder 38 and the circuit board 23. The hole 37 allows the spindle 12 to extend through the sensor unit 3. Between the spindle 12 and the hole 37 there is provided a roller bearing 34 which allows the spindle 12 to rotate in relation to the sensor unit 3. The sensor unit 3 may thereby not rotate in relation to the telescopic column 1, during motion of the telescopic column 1. The roller bearing 34 however allows force to be transferred from the spindle 12 to the circuit board 31. If the motion of the telescopic column 1 is resisted by a resisting force, the resisting force is transferred through the driving arrangement 11, including the spindle 12 to the circuit board 31. Since the sensor unit 3 is attached to an inner surface 15 of the inner tube 14, a resisting force implies a bending moment onto the circuit board 31, by which its flexure changes. The resisting force may originate from a collision between the tabletop or any telescopic column 1 with an obstacle.

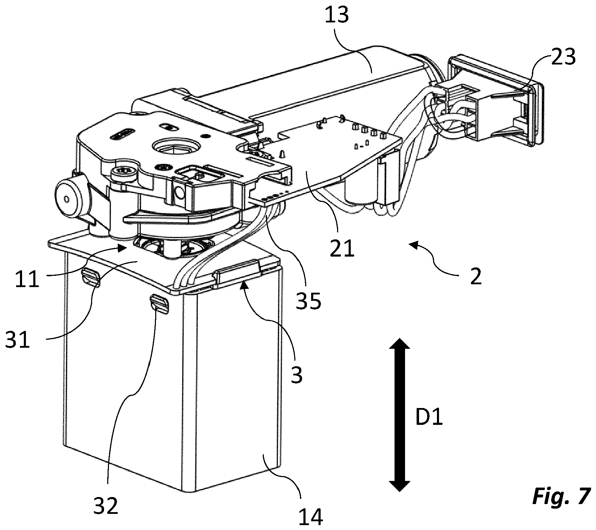

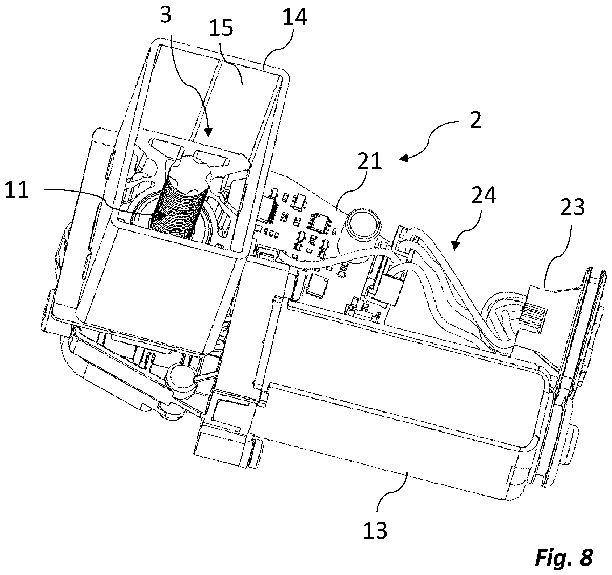

The collision detection device 2 may further comprise a processing unit 21. The circuit board 31 is connected by means of a harness 35, from the connection terminals 36 to the processing unit 21, which is illustrated in Fig. 7 and Fig. 8, along with the driving arrangement 11, the electric motor 13 and the inner tube 14. The sensor unit 3 is seen in Fig. 8, being in contact with the inner surface 15 of the inner tube 14. The collision detection device 2 may move with the motion of the inner tube 14 and the height adjustable surface, along the direction D1, by means of the driving arrangement 11, which is driven by the electrical motor 13. The collision detection device 1 may also be mounted onto a lower side of the movable surface. The processing unit 21 may e.g. be mounted onto the movable surface with fastening means, such as screwing means.

The processing unit 21 and the driving arrangement 11 are electrically powered though a power supply terminal 23. The processing unit 21 may supply a current through the harness 35 to the circuit board 31 and through the at least one wiring circuit 40. The processing unit 21 may measure an electrical quantity which is dependent on the electric characteristic of the at least one wiring circuit, such as voltage over two ends which are connected to the circuit board 31. The processing means may be provided a threshold value related to said electrical quantity over or under which it is configured to issue a collision event signal. The processing means 21 may alternatively issue a collision event signal based on repeated measurements or a continuous measurement of the electrical quantity during the motion of the telescopic column 1. When and whether to issue a collision event signal may also be based on other information, which is provided the processing unit 21 from a calibration of the collision detection device 2. Said information may comprise one or more of information from earlier measurements during one or a plurality of calibrations of the collision detection device 2, information about the circuit board 31, the weight of the tabletop or components of the telescopic column 1, and provided correlations between said electrical quantity and force resisting the motion of the table-top and telescopic column 1, for different positions of the telescopic column 1. A calibration may be performed before use of the collision detection device 2, by an operator, as a calibration program or during regular use of the telescopic column 1, by a user. The calibration may be performed during partial or entire extension and/or contraction of the telescopic column 2.

Furthermore, the processing unit 21 may control the motion of the driving arrangement 11. A collision event signal may be issued by the processing unit 21 by which it halts and optionally also reverses the motion of the driving arrangement 11.

Within the inventive concept of the collision detection disclosed above, there may be provided a collision control method for an adjustable piece of furniture. In the method, a collision detection device may be used, which may be a collision detection device according to any of the embodiments discussed above, or another collision detection device configured to detect an absolute value of a load on the adjustable piece of furniture.

The method may comprise a step of providing a calibration curve. Providing the calibration curve may be made by moving the adjustable piece of furniture a full stroke of length, i.e. by moving it from fully contracted state to fully extended state, or vice versa. In one embodiment the adjustable piece of furniture may be moved in both ways, i.e. from one of the end positions, to the other, and back. During the motion of the adjustable piece of furniture for creating a calibration curve, the adjustable piece of furniture may be without external load, e.g. without external load other than the load provided at normal use. If the adjustable piece of furniture for instance is a telescopic column arranged in a height-adjustable table, the calibration curve may be provided during motion without other load than the internal load in the column and components of the table, such as the tabletop.

During the motion of the adjustable piece of furniture, the collision detection device may register the load it is exposed to during the motion. This registration of the load may form the calibration curve. The load registration may be made at predetermined intervals along the stroke of length, such as every 3-10 mm. The predetermined intervals may also be less, such as every millimeter, or every second millimeter. Alternatively, the load registration may be made continuously along the stroke, such as at every pulse of the electric motor driving the motion of the adjustable piece of furniture. In one embodiment the electric motor may be provided with three pulses for every millimeter of the stroke.

The calibration curve may be provided as the detected load value on the collision detection device in a state without any external load or collision on the adjustable piece of furniture, as a function of the stroke, i.e. the position of the adjustable piece of furniture along its stroke of length.

The calibration curve may represent the load on the collision detection device caused by the internal components of the adjustable piece of furniture. It may be especially friction between different components of the adjustable piece of furniture. Since the friction between components may be different along the stroke of length, the calibration curve may normally not be constant or linear, but non-linear.

The collision control method for the telescopic column may further comprise a step of detecting a collision of a telescopic column based on the calibration curve and a registered present load value provided by the collision detection device. The present load value may be received by a processing unit from the collision detection device. When assessing whether the present load value may indicate a collision, the processing unit may compare the present load value with the load value for the present position along the stroke of length in the calibration curve. The threshold at which the processing unit may be configured to stop the motion of the adjustable piece of furniture (and possibly revert the motion a predetermined amount) may be dependent on the load value in the calibration curve at the respective position along the stroke of length.

As an illustrative example, at a position 5 cm from the most contracted position of the adjustable piece of furniture the calibration curve indicates an internal load of 8 kg. The processing unit may be configured to issue a collision event signal, representing a detected collision, if detecting a load above 15 kg. During motion of the adjustable piece of furniture, a load of 20 kg is detected by the collision detection device. The external load is thereby 12 kg and should not be detected as a collision. The processing unit uses the information from the calibration curve to determine that the detected external load is below the threshold. At another position along the stroke of length, such as 30 cm from the contracted position, the calibration curve specifies a lower internal load of 3 kg. During a motion of the adjustable piece of furniture the collision detection device again detects a load of 20 kg. Since the internal load at this position is 3 kg according to the calibration curve, the detected load is by the processing unit interpreted as 17 kg external load, which is above the threshold of 15 kg. The processing unit may then issue a collision event signal and stop the motion of the adjustable piece of furniture.

In one embodiment, the collision control method further may adapt to initial load on the furniture when motion is started. The calibration curve may be temporarily reconfigured or replaced, or the threshold may be redetermined, based on a present load detected when the motion of the adjustable piece of furniture starts. For instance, in case of a table comprising a telescopic column the table may at normal use be provided with several objects, such as computer equipment. In case of an adjustable bed, the bed may be populated by a person. This provides an initial external load on the adjustable piece of furniture that may be taken into account when determining whether a collision occurs. If an initial load of 20 kg is provided on the adjustable piece of furniture when the motion starts, the calibration curve may be raised with 20 kg throughout the curve. Alternatively, several calibration curves may be provided, all which may be based on an originally generated calibration curve or individually generated, which calibration curves apply for different initial loads. When motion of the adjustable piece of furniture starts with an initial load of 20 kg, a collision event signal may be issued when a threshold, such as 15 kg, above the calibration curve load at the present stroke position is exceeded.

In one embodiment, as set of calibration curves may be provided, representing different initial loads. Such initial loads may for instance be 0 kg, 20 kg and maximum load (representing maximum allowed load according to a specification). These calibration curves may be individually generated.

The calibration curve(s) may be generated after manufacturing of the adjustable piece of furniture, prior to an end-user starting to use the furniture. The calibration curve(s) may be unique for each copy of moveable parts of the furniture. During use of the adjustable piece of furniture, the components of the adjustable piece of furniture may be exposed to wear, making the friction between the components to change. The calibration curve(s) may thereby need to be updated during the lifetime of the adjustable piece of furniture. An update of the calibration curve(s) may be made by performing the same motion of the adjustable piece of furniture as when generating the initial calibration curve(s) and registering the load without any external load on the adjustable piece of furniture.

Alternatively, the processing unit may be configured to adjust the calibration curve(s) over time. For instance may the processing unit be configured to continuously compare detected load registrations to the load characteristics in the calibration curve(s), and adjust the curve reoccurring deviations from the calibration curve(s) are determined without any collision detected. Alternatively, such comparison is made periodically. The processing unit may for instance be configured to only adjust instances of the calibration curve(s) towards a lower load. When adjusting the calibration curve(s), the processing unit may adjust one or more load values for one or more respective stroke positions.

According to one aspect, a collision control method for the adjustable piece of furniture may be provided, comprising a step of receiving a present load value signal from a collision detection device during motion of the adjustable piece of furniture, the load value signal representing a detected load on the collision detection device. The collision control method further comprises a step of comparing the received load value with a calibration curve, wherein the calibration curve provides a load value on the collision detection device in a state without any external load or collision on the adjustable piece of furniture, as a function of the stroke position. Finally, the collision control method comprises a step of determining whether to stop the motion of the adjustable piece of furniture based on said comparison and a predetermined threshold value.

In one embodiment, the collision control method may be performed by a processing unit in the adjustable piece of furniture. The present load value signal may be received from a collision detection device arranged in the adjustable piece of furniture. In an embodiment where the adjustable piece of furniture comprises several telescopic columns, the processing unit may receive a present load value signal from a collision detection device arranged in the same telescopic column as the processing unit, or from a collision detection device arranged in another telescopic column. In one embodiment, the collision detection device may be a collision detection device according to any embodiment described herein. The calibration curve may be stored in the processing unit, or in a memory unit in connection with the processing unit. In one embodiment the adjustable piece of furniture having two or more telescopic columns may comprise one processing unit in each telescopic column. The processing units of the telescopic columns may provide respective signals, e.g. a collision detection signal. The processing units may each be in communication with the memory unit, or may each store the calibration curve. The adjustable piece of furniture may further comprise a central processing units being configured to receive and process signals from the processing units in the respective telescopic columns.

According to another aspect, a calibration curve generation method may be provided for generating a calibration curve for an adjustable piece of furniture. The method may comprise a step of providing a load detection device arranged on or in the adjustable piece of furniture and configured to provide a signal representing a present load on the load detection device. The method may further comprise a step of registering the signal from the load detection device during motion of the adjustable piece of furniture from one end position to the other end position while the adjustable piece of furniture is not exposed to any external load. The registration of the signal from load detection device may form a calibration curve of the load as a function of stroke position of the adjustable piece of furniture.

By external load, it may be meant any load exerted on the adjustable piece of furniture or the arrangement it is arranged in from external objects or entities. Load to be detected during generation of the calibration curve may mainly be load from the weight of the adjustable piece of furniture or the arrangement itself, and/or friction between components of the adjustable piece of furniture causing a varying load on the load detection device. The motion of the adjustable piece of furniture may, during generation of the calibration curve, be made in one way only, or in both ways, i.e. from one end position to the other and back.

By end position it may be meant one of the most contracted state of the adjustable piece of furniture and the most extended state of the adjustable piece of furniture.

The term collision detection device used throughout this document may be interchangeably used with the term load detection device. Further, the load detection device described may in some embodiments be formed by the collision detection device according to any embodiment disclosed herein.

By using a calibration curve when controlling the motion of an adjustable piece of furniture and detecting a collision, load caused by internal components and varieties thereof may be compensated for, making the collision detection more accurate and precise. A more accurate and precise collision detection may further enable use of a lower threshold for collision detection, with maintained reliability. It may further enable a high speed detection, enabling a fast reaction on detected collision.

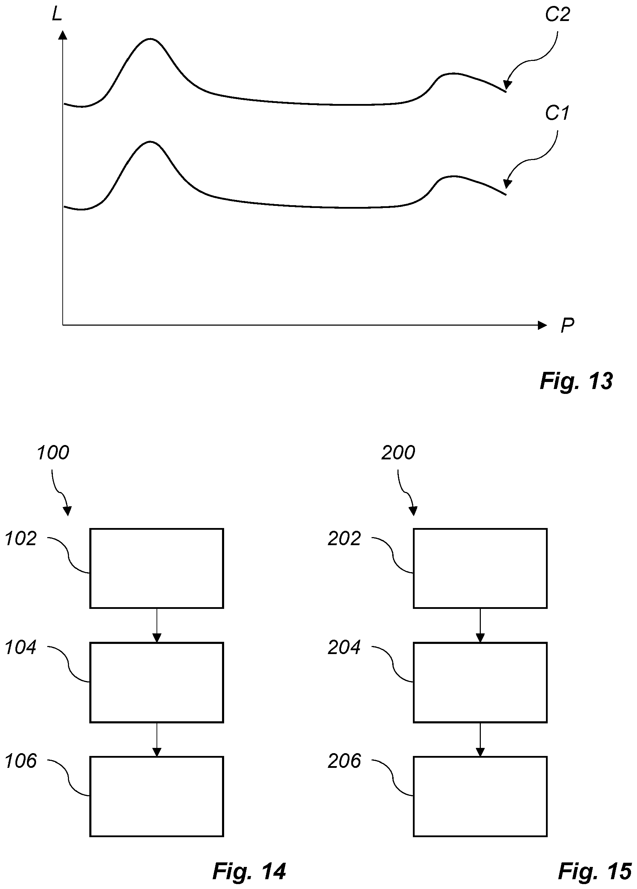

Fig. 13 illustrates an example calibration curve C1 generated for a telescopic column. The calibration curve C1 represents the detected load L caused by the internal components of the adjustable piece of furniture as a function of the stroke position P. The detected load during generation of the calibration curve C1 varies along the stroke of length of the adjustable piece of furniture. At different stroke positions, the friction between components in the adjustable piece of furniture may be different.

Fig. 13 further shows a second calibration curve C2 representing a calibration curve for a predetermined initial load. When the adjustable piece of furniture is used and motion thereof is started, the initial load on the adjustable piece of furniture is determined based on the detected present load on the detection device. With a determined initial load being at the level of the predetermined initial load for the second calibration curve C2, the second calibration curve C2 will be used for the detection of collision of the adjustable piece of furniture. The method may comprise providing yet additional calibration curves for different predetermined initial loads. The initial load may be load on the adjustable piece of furniture during use. The initial load may not affect the shape of the calibration curve C1, C2, but only the level of the calibration curve C1, C2 on the y axis as illustrated in fig. 13.

Fig. 14 illustrates flow chart of a collision control method 100 for the adjustable piece of furniture. The collision control method 100 comprises a step of receiving 102 a present load value signal from a collision detection device during motion of the adjustable piece of furniture. The load value signal represents a detected load on the collision detection device. The collision control method 100 further comprises a step of comparing 104 the received load value with a calibration curve C1, C2, wherein the calibration curve C1, C2 provides a load value on the collision detection device in a state without any external load or collision on the adjustable piece of furniture, as a function of the stroke position. Finally, the collision control method 100 comprises a step of determining 106 whether to stop the motion of the adjustable piece of furniture based on said comparison 104 and a predetermined threshold value (or combination of two or more predetermined threshold values).

Fig. 15 illustrates flow chart of a calibration curve generation method 200. The calibration curve generation method 200 comprises a step of providing 202 a load detection device arranged on or in the adjustable piece of furniture which is configured to provide a signal representing a present load on the load detection device. The calibration curve generation method 200 further comprises a step of registering 204 the signal from the load detection device during motion of the adjustable piece of furniture from one end position to the other end position while the adjustable piece of furniture is not exposed to any external load. The calibration curve generation method 200 further comprises a step of generating 206 a calibration curve as the registered load values as a function of the stroke position of the adjustable piece of furniture. The registration 204 and generation 206 of the calibration curve C1, C2 may be performed by a processing unit in the adjustable piece of furniture. The stroke position may be known to the processing unit based on its control of the motion of the adjustable piece of furniture.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A collision detection device (2) configured to be arranged in an adjustable piece of furniture comprising a driving arrangement (11) and a first part (14) and a second part (16) being moveable relative to each other, said collision detection device being configured to detect a collision during motion of said adjustable piece of furniture, the collision detection device (2) comprising:
- a holder (38) configured to, when in use, be arranged to one of the first and second parts (14, 16) of the adjustable piece of furniture to be at least indirectly in contact with a part of the driving arrangement (11);
- a circuit board (31) arranged on the holder (38), said circuit board (31) comprising a wiring circuit (40) on at least one of its sides;
wherein the holder (38) is configured to, when arranged to the adjustable piece of furniture, transfer a force from the driving arrangement (11) acting on the holder (38) to the circuit board (31) such that said force implies a flexure of the circuit board (31); and
wherein the wiring circuit (40) is configured to have an electrical characteristic that depend on the flexure of the circuit board (31).

2. The collision detection device (2) according to claim 1, further comprising a processing unit (21) configured to apply a voltage over the at least one wiring circuit (40) and measuring an electrical quantity which is dependent on the electrical characteristic of the at least one wiring circuit (40).

3. The collision detection device (2) according to claim 2, wherein the processing unit (21) is configured to issue a collision event signal based on the measured electrical quantity of the at least one wiring circuit (40).

4. The collision detection device (2) according to any preceding claim,
wherein said wiring circuit (40) on the circuit board (31) is a first wiring circuit (40) arranged on a first side of the circuit board (31), and the circuit board (31) further comprises a second wiring circuit (42) on a second side of the circuit board (31), and
wherein electrical characteristics of both the first (40) and second wiring circuits (42) depend on the flexure of the circuit board (31).

5. The collision detection device (2) according to claim 4 and any of claims 2 or 3, wherein the processing unit (21) is configured to measure an electrical quantity of both wiring circuits (40;42) respectively.

6. The collision detection device (2), according to any of claims 2, 3 or 5, wherein the processing unit (21) is configured to estimate a derivative of the electrical quantity.

7. The collision detection device (2) according to any preceding claim,
wherein said electrical characteristic of the at least one wiring circuit (40) is electrical resistance.

8. The collision detection device according to any preceding claim, wherein the adjustable piece of furniture comprises at least one telescopic column, said first part being a first tube of the at least one telescopic column and said second part being a second part of said telescopic column, wherein the holder (38) is configured to be arranged in contact with one the tubes of the telescopic column (1).

9. The collision detection device (2) according to claim 8, wherein the holder (38) is configured to be arranged on a part of the piece of furniture or the driving arrangement through a snap-fit function or screwing means.

10. The collision detection device (2) according to claims 3-9, wherein the processing unit (21) is configured to be calibrated for forces between the holder (38) and the adjustable piece of furniture or the driving arrangement, by repeatedly or continuously measuring the electrical characteristic of the at least one wiring circuit motion of the adjustable piece of furniture.

11. The collision detection device (2) according to any preceding claim wherein the circuit board (31) is pre-biased on the holder (38).

12. The collision detection device (2) according to claim 11, wherein the holder (38) is shaped to hold the circuit board (31) in a bent configuration in a resting position.

13. A method to detect a collision of an adjustable piece of furniture (1), said method comprising the steps of:
providing a collision detection device (2) according to any of the claims 1-12 on an adjustable piece of furniture (1),
measuring an electrical quantity of the wiring circuit (40) during motion of the adjustable piece of furniture (1),
issuing, based on said measuring, a collision event signal.

14. The method according to claim 13, further comprising a step of halting and/or reversing the motion of the adjustable piece of furniture (1) based on the collision event signal.

15. The method according to claim 13 or 14, further comprising a step of comparing the measured electrical quantity with a predetermined threshold, wherein the predetermined threshold varies along the telescopic column's stroke of length based on a calibration curve (C1, C2), the calibration curve (C1, C2) providing load on the collision detection device (2) in a state of the telescopic column (1) without external load as a function of stroke position, and issuing the collision event signal based on said comparison.

## Patentansprüche

1. Kollisionserkennungsvorrichtung (2), die dazu ausgebildet ist, in einem verstellbaren Möbel angeordnet zu sein, das eine Antriebsanordnung (11) und einen ersten Teil (14) und einen zweiten Teil (16) umfasst, die in Bezug aufeinander bewegbar sind, wobei die Kollisionserkennungsvorrichtung dazu ausgebildet ist, eine Kollision bei Bewegung des verstellbaren Möbels zu erkennen, wobei die Kollisionserkennungsvorrichtung (2) Folgendes umfasst:
- einen Halter (38), der dazu ausgebildet ist, bei Gebrauch so zu einem von dem ersten und zweiten Teil (14, 16) des verstellbaren Möbels angeordnet zu sein, dass er wenigstens indirekt mit einem Teil der Antriebsanordnung (11) in Kontakt steht;
- eine Platine (31), die auf dem Halter (38) angeordnet ist, wobei die Platine (31) einen Verdrahtungsschaltkreis (40) auf wenigstens einer ihrer Seiten umfasst;
wobei der Halter (38) dazu ausgebildet ist, bei Anordnung zum verstellbaren Möbel eine Kraft von der Antriebsanordnung (11), die auf den Halter (38) wirkt, so auf die Platine (31) zu übertragen, dass die Kraft eine Biegung der Platine (31) impliziert; und
wobei der Verdrahtungsschaltkreis (40) so ausgebildet ist, dass er eine elektrische Eigenschaft aufweist, die von der Biegung der Platine (31) abhängig sind.

2. Kollisionserkennungsvorrichtung (2) nach Anspruch 1, ferner umfassend eine Verarbeitungseinheit (21), die dazu ausgebildet ist, eine Spannung über den wenigstens einen Verdrahtungsschaltkreis (40) anzulegen und eine elektrische Größe zu messen, die von der elektrischen Eigenschaft des wenigstens einen Verdrahtungsschaltkreises (40) abhängig ist.

3. Kollisionserkennungsvorrichtung (2) nach Anspruch 2, wobei die Verarbeitungseinheit (21) dazu ausgelegt ist, ein Kollisionsereignissignal basierend auf der gemessenen elektrischen Größe des wenigstens einen Verdrahtungsschaltkreises (40) auszugeben.

4. Kollisionserkennungsvorrichtung (2) nach einem der vorhergehenden Ansprüche, wobei der Verdrahtungsschaltkreis (40) auf der Platine (31) ein erster Verdrahtungsschaltkreis (40) ist, der auf einer ersten Seite der Platine (31) angeordnet ist, und die Platine (31) ferner einen zweiten Verdrahtungsschaltkreis (42) auf einer zweiten Seite der Platine (31) umfasst, und
wobei elektrische Eigenschaften sowohl des ersten (40) als auch des zweiten Verdrahtungsschaltkreises (42) von der Biegung der Platine (31) abhängig sind.

5. Kollisionserkennungsvorrichtung (2) nach Anspruch 4 und einem der Ansprüche 2 oder 3, wobei die Verarbeitungseinheit (21) dazu ausgebildet ist, jeweils eine elektrische Größe beider Verdrahtungsschaltkreise (40; 42) zu messen.

6. Kollisionserkennungsvorrichtung (2) nach einem der Ansprüche 2, 3 oder 5, wobei die Verarbeitungseinheit (21) dazu ausgebildet ist, eine Ableitung der elektrischen Größe zu schätzen.

7. Kollisionserkennungsvorrichtung (2) nach einem der vorhergehenden Ansprüche, wobei die elektrische Eigenschaft des wenigstens einen Verdrahtungsschaltkreises (40) elektrischer Widerstand ist.

8. Kollisionserkennungsvorrichtung nach einem der vorhergehenden Ansprüche, wobei das verstellbare Möbel wenigstens eine Teleskopsäule umfasst, wobei der erste Teil ein erstes Rohr der wenigstens einen Teleskopsäule ist und der zweite Teil ein zweiter Teil der Teleskopsäule ist, wobei der Halter (38) dazu ausgebildet ist, in Kontakt mit einem der Rohre der Teleskopsäule (1) angeordnet zu sein.

9. Kollisionserkennungsvorrichtung (2) nach Anspruch 8, wobei der Halter (38) dazu ausgebildet ist, durch eine Rastfunktion oder Schraubmittel auf einem Teil des Möbels oder der Antriebsanordnung angeordnet zu sein.

10. Kollisionserkennungsvorrichtung (2) nach den Ansprüchen 3 bis 9, wobei die Verarbeitungseinheit (21) dazu ausgebildet ist, für Kräfte zwischen dem Halter (38) und dem verstellbaren Möbel oder der Antriebsanordnung kalibriert zu werden, indem sie wiederholt oder fortlaufend die elektrische Eigenschaft des wenigstens einen Verdrahtungsschaltkreises Bewegung des verstellbaren Möbels misst.

11. Kollisionserkennungsvorrichtung (2) nach einem der vorhergehenden Ansprüche, wobei die Platine (31) auf dem Halter (38) vorgespannt ist.

12. Kollisionserkennungsvorrichtung (2) nach Anspruch 11, wobei der Halter (38) so geformt ist, dass er die Platine (31) in einer gebogenen Konfiguration in einer Ruheposition hält.

13. Verfahren zur Erkennung einer Kollision eines verstellbaren Möbels (1), wobei das Verfahren die folgenden Schritte umfasst:
Bereitstellen einer Kollisionserkennungsvorrichtung (2) nach einem der Ansprüche 1 bis 12 an einem verstellbaren Möbel (1),
Messen einer elektrischen Größe des Verdrahtungsschaltkreises (40) bei Bewegung des verstellbaren Möbels (1),
Ausgeben eines Kollisionsereignissignals basierend auf der Messung.

14. Verfahren nach Anspruch 13, ferner umfassend einen Schritt des Anhaltens und/oder Umkehrens der Bewegung des verstellbaren Möbels (1) basierend auf dem Kollisionsereignissignal.

15. Verfahren nach Anspruch 13 oder 14, ferner umfassend einen Schritt des Vergleichens der gemessenen elektrischen Größe mit einer vorbestimmten Schwelle, wobei die vorbestimmte Schwelle entlang dem Längenhub der Teleskopsäule basierend auf einer Kalibrierungskurve (C1, C2) variiert, wobei die Kalibrierungskurve (C1, C2) eine Last auf der Kollisionserkennungsvorrichtung (2) in einem Zustand der Teleskopsäule (1) ohne externe Last in Abhängigkeit von der Hubposition bereitstellt, und des Ausgebens des Kollisionsereignissignals basierend auf dem Vergleich.

## Revendications

1. Dispositif de détection de collision (2) configuré pour être installé dans un meuble réglable comprenant un ensemble d'entraînement (11) ainsi qu'une première partie (14) et une deuxième partie (16) déplaçables l'une par rapport à l'autre, ledit dispositif de détection de collision étant configuré pour détecter une collision pendant un mouvement dudit meuble réglable, le dispositif de détection de collision (2) comprenant :
- un support (38) configuré pour être disposé sur l'une parmi les première et deuxième parties (14, 16) du meuble réglable pendant l'utilisation pour être au moins indirectement en contact avec une partie de l'ensemble d'entraînement (11) ;
- une carte de circuit (31) disposée sur le support (38), ladite carte de circuit (31) comprenant un circuit de câblage (40) sur l'un au moins de ses côtés ;
dans lequel le support (38), lorsqu'il est disposé sur le meuble réglable, est configuré pour transférer une force à partir de l'ensemble d'entraînement (11) agissant sur le support (38) vers la carte de circuit (31), de telle façon que ladite force provoque un fléchissement de la carte de circuit (31) ; et
dans lequel le circuit de câblage (40) est configuré pour présenter une caractéristique électrique dépendante du fléchissement de la carte de circuit (31).

2. Dispositif de détection de collision (2) selon la revendication 1, comprenant en outre une unité de traitement (21) configurée pour appliquer une tension sur l'au moins un circuit de câblage (40) et pour mesurer une quantité électrique dépendante de la caractéristique électrique de l'au moins un circuit de câblage (40).

3. Dispositif de détection de collision (2) selon la revendication 2, dans lequel l'unité de traitement (21) est configurée pour émettre un signal d'évènement de collision sur la base de la quantité électrique mesurée de l'au moins un circuit de câblage (40).

4. Dispositif de détection de collision (2) selon l'une quelconque des revendications précédentes, dans lequel ledit circuit de câblage (40) sur la carte de circuit (31) est un premier circuit de câblage (40) disposé sur un premier côté de la carte de circuit (31), et la carte de circuit (31) comprend en outre un deuxième circuit de câblage (42) sur un deuxième côté de la carte de circuit (31), et
dans lequel des caractéristiques électriques à la fois du premier (40) et du deuxième circuit de câblage (42) dépendent du fléchissement de la carte de circuit (31).

5. Dispositif de détection de collision (2) selon la revendication 4 et l'une quelconque des revendications 2 ou 3, dans lequel l'unité de traitement (21) est configurée pour mesurer une quantité électrique des deux circuits de câblage (40 ; 42) respectivement.

6. Dispositif de détection de collision (2) selon l'une quelconque des revendications 2, 3 ou 5, dans lequel l'unité de traitement (21) est configurée pour estimer une dérivée de la quantité électrique.

7. Dispositif de détection de collision (2) selon l'une quelconque des revendications précédentes, dans lequel ladite caractéristique électrique de l'au moins un circuit de câblage (40) est une résistance électrique.

8. Dispositif de détection de collision selon l'une quelconque des revendications précédentes, dans lequel le meuble réglable comprend au moins une colonne télescopique, ladite première partie étant un premier tube de l'au moins une colonne télescopique et ladite deuxième partie étant une deuxième partie de ladite colonne télescopique, dans lequel le support (38) est configuré pour être disposé en contact avec l'un des tubes de la colonne télescopique (1).

9. Dispositif de détection de collision (2) selon la revendication 8, dans lequel le support (38) est configuré pour être disposé sur une partie du meuble réglable ou de l'ensemble d'entraînement par une fonction d'encliquetage ou un moyen de vissage.

10. Dispositif de détection de collision (2) selon les revendications 3 à 9, dans lequel l'unité de traitement (21) est configurée pour être étalonnée pour des forces entre le support (38) et le meuble réglable ou l'ensemble d'entraînement, par mesure répétée ou continue de la caractéristique électrique du mouvement de l'au moins un circuit de câblage du meuble réglable.

11. Dispositif de détection de collision (2) selon l'une quelconque des revendications précédentes, dans lequel la carte de circuit (31) est précontrainte sur le support (38).

12. Dispositif de détection de collision (2) selon la revendication 11, dans lequel le support (38) est formé pour maintenir la carte de circuit (31) dans une configuration courbée dans une position de repos.

13. Procédé de détection d'une collision d'un meuble réglable (1), ledit procédé comprenant les étapes suivantes :
mise à disposition d'un dispositif de détection de collision (2) selon l'une quelconque des revendications 1 à 12 sur un meuble réglable (1), mesure d'une quantité électrique du circuit de câblage (40) pendant le mouvement du meuble réglable (1),
émission, sur la base de ladite mesure, d'un signal d'évènement de collision.

14. Procédé selon la revendication 13, comprenant en outre une étape de blocage et/ou d'inversion du mouvement du meuble réglable (1) sur la base du signal d'évènement de collision.

15. Procédé selon la revendication 13 ou 14, comprenant en outre une étape de comparaison de la quantité électrique mesurée avec un seuil prédéterminé, dans lequel le seuil prédéterminé varie le long de la course en longueur de la colonne télescopique sur la base d'une courbe d'étalonnage (C1, C2), la courbe d'étalonnage (C1, C2) fournissant une charge sur le dispositif de détection de collision (2) dans un état de la colonne télescopique (1) sans charge externe en fonction de la position de course, et d'émission du signal d'évènement de collision sur la base de ladite comparaison.
